(19) Europäisches Patentamt
European Patent Office
Office européen des brevets

(11) **EP 3 080 501 B1**

(12) **EUROPÄISCHE PATENTSCHRIFT**

(45) Veröffentlichungstag und Bekanntmachung des Hinweises auf die Patenterteilung:
**29.11.2017 Patentblatt 2017/48**

(21) Anmeldenummer: **14814801.8**

(22) Anmeldetag: **10.12.2014**

(51) Int Cl.:
*F16K 31/40* ^(2006.01)      *D06F 39/08* ^(2006.01)
*A47L 15/42* ^(2006.01)

(86) Internationale Anmeldenummer:
**PCT/EP2014/077102**

(87) Internationale Veröffentlichungsnummer:
**WO 2015/086630 (18.06.2015 Gazette 2015/24)**

(54) **HAUSHALTSGERÄT MIT EINEM MAGNETVENTIL**

HOUSEHOLD APPLIANCE HAVING A SOLENOID VALVE

APPAREIL MÉNAGER MUNI D'UNE ÉLECTROVANNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.12.2013 DE 102013225530**

(43) Veröffentlichungstag der Anmeldung:
**19.10.2016 Patentblatt 2016/42**

(73) Patentinhaber: **BSH Hausgeräte GmbH
81739 München (DE)**

(72) Erfinder: **CABALEIRO MARTINS, Marcelo
13629 Berlin (DE)**

(56) Entgegenhaltungen:
**WO-A1-89/02557          DE-A1- 19 801 363
DE-A1- 19 948 446      FR-A- 1 323 338
GB-A- 2 044 409          JP-A- 2013 122 273
US-A- 5 299 775          US-A- 5 441 232**

**Beschreibung**

Die vorliegende Erfindung betrifft ein Haushaltsgerät mit einem Magnetventil, das eine Membran umfasst.

In Haushaltsgeräten können Magnetventile mit Membranen zum Ein- und Ausschalten einer Strömung in Druckleitungen verwendet werden.

Die Druckschrift EP 685672 A1 beschreibt beispielsweise eine Waschmaschine mit einem Magnetventil zum Schalten eines Wasserzuflusses, das eine Membran und eine Feder mit einer kleinen Federkonstante umfasst. Mit einem derartigen Magnetventil kann zwar der der Wasserzufluss ein- und ausgeschaltet werden, eine feingranulare Steuerung einer Flussrate ist jedoch nicht möglich.

Die Offenlegungsschrift WO 89/02557 A1 zeigt ein Solenoidventil.

Die Offenlegungsschrift JP H07198058 A zeigt ein Magnetventil.

Die Offenlegungsschrift US 2012/0228535 A1 zeigt ein Magnetventil.

Die Patentschrift US 4,178,573 zeigt einen Ventilmechanismus, der elektrisch betrieben werden kann. US5299775 zeigt ein Haushaltsgerät mit einem Magnetventil gemäß dem Oberbegriff des Anspruchs 1.

Es ist die der Erfindung zugrundeliegende Aufgabe, ein Haushaltsgerät mit einem Magnetventil anzugeben, dass zur Steuerung einer Flussrate oder eines Druckes verwendet werden kann.

Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem Aspekt der Erfindung wird die Aufgabe durch ein Haushaltsgerät mit einem Magnetventil gelöst, das eine Membran mit einer Vorsteueröffnung, einen Steuerzapfen zum Verschließen der Vorsteueröffnung und eine Federeinrichtung zum Beaufschlagen des Steuerzapfens mit einer Kraft umfasst, bei dem die Federeinrichtung eine erste Federkonstante zum Drücken des Steuerzapfens auf die Vorsteueröffnung in einem geschlossenen Zustand der Vorsteueröffnung und eine zweite Federkonstante zum Halten des Steuerzapfens in einer Gleichgewichtsposition in einem geöffneten Zustand der Vorsteueröffnung aufweist. Dadurch wird beispielsweise der technische Vorteil erreicht, dass die Flussrate des Wassers in Abhängigkeit eines Eingangsstromes oder einer Eingangsspannung in eine Magnetspule gesteuert werden kann.

In einer vorteilhaften Ausführungsform des Haushaltsgerätes ist eine Druckleitung vorgesehen. Das Haushaltsgerät weist also insbesondere eine Druckleitung auf. Zum Steuern der Flussrate in der Druckleitung und/oder des Drucks in der Druckleitung wird vorzugweise das Magnetventil verwendet. Das heißt also insbesondere, dass mittels des Magnetventils die Flussrate und/oder der Druck in der Druckleitung gesteuert wird respektive gesteuert werden kann.

Unter einem Magnetventil wird insbesondere ein Ventil verstanden, das von einem Elektromagneten betätigt wird. Bei einem vorgesteuerten Magnetventil wird zum Öffnen und Schließen beispielsweise eine Druckdifferenz des Betriebsdruckes verwendet. Der Antrieb des vorgesteuerten Magnetventils weist vorzugsweise eine Vorsteuerfunktion auf, durch die das Hauptdichtelement, wie beispielsweise eine Membran oder ein Kolben, entlastet wird.

Unter einem Haushaltsgerät wird ein Gerät verstanden, das zur Haushaltsführung eingesetzt wird. Das kann ein Haushaltsgroßgerät sein, wie beispielsweise eine Waschmaschine, ein Wäschetrockner, eine Geschirrspülmaschine, oder ein Kältegerät, wie z.B. ein Kühlschrank, ein Gefrierschrank oder eine Kühlgefrierkombination. Das kann aber auch ein Haushaltskleingerät sein, wie beispielsweise ein Warmwasserbereiter, ein Kaffeevollautomat oder eine Küchenmaschine. Erfindungsgemäß ist die erste Federkonstante kleiner als die zweite Federkonstante. Dadurch wird beispielsweise der technische Vorteil erreicht, dass der Steuerzapfen mit einer geringen Kraft auf der Vorsteueröffnung gehalten wird und sich durch eine geringe elektrische Leistung betätigen lässt. Dagegen wird der Steuerzapfen mit einer hohen Kraft in der Gleichgewichtsposition gehalten.

In einer weiteren vorteilhaften Ausführungsform des Haushaltsgerätes umfasst die Federeinrichtung eine erste Feder mit der ersten Federkonstante und eine zweite Feder mit der zweiten Federkonstante. Dadurch wird beispielsweise der technische Vorteil erreicht, dass die Federeinrichtung auf einfache Weise mittels zweier unterschiedlicher Federn realisiert werden kann.

In einer weiteren vorteilhaften Ausführungsform des Haushaltsgerätes sind die erste Feder und die zweite Feder parallel oder seriell angeordnet. Dadurch wird beispielsweise der technische Vorteil erreicht, dass sich die Eigenschaften der Federn auf einfache Weise kombinieren lassen.

In einer weiteren vorteilhaften Ausführungsform des Haushaltsgerätes weist die erste Feder eine größere Länge als die zweite Feder auf. Dadurch wird beispielsweise der technische Vorteil erreicht, dass die erste Feder zunächst für ein Schließen der Vorsteueröffnung wirkt, bis ab einer bestimmten Komprimierung die zweite Feder zum Halten einer Gleichgewichtsposition wirkt.

In einer weiteren vorteilhaften Ausführungsform des Haushaltsgerätes sind die erste Feder und/oder die zweite Feder durch Spiralfedern gebildet. Dadurch wird beispielsweise der technische Vorteil erreicht, dass zuverlässige und einfach herzustellende Federn verwendet werden.

In einer weiteren vorteilhaften Ausführungsform des Haushaltsgerätes sind die erste Spiralfeder und/oder die zweite Spiralfeder an einem Gehäuse des Magnetventils abgestützt. Dadurch wird beispielsweise der technische Vorteil erreicht, dass sich die Kräfte des Steuerzapfens auf das Gehäuse übertragen lassen.

In einer weiteren vorteilhaften Ausführungsform des Haushaltsgerätes ist die zweite Spiralfeder innerhalb der ersten Spiralfeder angeordnet. Dadurch wird beispielsweise der technische Vorteil erreicht, dass sich ein kompakter Aufbau des Magnetventils ergibt.

In einer weiteren vorteilhaften Ausführungsform des Haushaltsgerätes ist die erste Spiralfeder innerhalb der zweiten Spiralfeder angeordnet. Dadurch wird beispielsweise ebenfalls der technische Vorteil erreicht, dass sich ein kompakter Aufbau des Magnetventils ergibt.

In einer weiteren vorteilhaften Ausführungsform des Haushaltsgerätes weist die erste Spiralfeder eine gegenläufige Schraubendrehung zu der zweiten Spiralfeder auf. Dadurch wird beispielsweise der technische Vorteil erreicht, dass sich ein Verhaken der Spiralfedern verhindern lässt.

In einer weiteren vorteilhaften Ausführungsform des Haushaltsgerätes umfasst die Federreinrichtung eine Feder mit einem ersten Federabschnitt mit der ersten Federkonstante und einem zweiten Federabschnitt mit der zweiten Federkonstante. Dadurch wird beispielsweise der technische Vorteil erreicht, dass das Magnetventil mithilfe einer einzigen Feder realisiert ist.

In einer weiteren vorteilhaften Ausführungsform des Haushaltsgerätes grenzt der erste Federabschnitt an dem Steuerzapfen an. Dadurch wird beispielsweise der technische Vorteil erreicht, dass zunächst der erste Federabschnitt komprimiert wird und anschließend die Gleichgewichtsposition durch den zweiten Federabschnitt gehalten wird.

In einer weiteren vorteilhaften Ausführungsform des Haushaltsgerätes umfasst der Steuerzapfen einen Stift zum Eindringen in die Vorsteueröffnung. Dadurch wird beispielsweise der technische Vorteil erreicht, dass eine Feinsteuerung für einen Auslassdruck erreicht wird.

In einer weiteren vorteilhaften Ausführungsform des Haushaltsgerätes weist der Stift einen kleineren Durchmesser als die Vorsteueröffnung auf. Dadurch wird beispielsweise der technische Vorteil erreicht, dass der Stift in der Vorsteueröffnung angeordnet sein kann.

In einer weiteren vorteilhaften Ausführungsform des Haushaltsgerätes ist der Stift durch einen Dichtkopf zum Abdichten der Vorsteueröffnung gebildet. Dadurch wird beispielsweise der technische Vorteil erreicht, dass sich ein einfacher und stabiler Aufbau des Stiftes ergibt.

In einer weiteren vorteilhaften Ausführungsform des Haushaltsgerätes ist respektive wird die Gleichgewichtsposition des Dichtkopfes erreicht, wenn sich die Kräfte, die auf den Dichtkopf wirken, ausgleichen. Das heißt also insbesondere, dass die Gleichgewichtsposition des Dichtkopfes derjenigen Position des Dichtkopfes entspricht, in welcher sich die Kräfte, die auf den Dichtkopf wirken, ausgleichen. Dadurch wird beispielsweise der technische Vorteil erreicht, dass in der Summe keine Kräfte mehr auf den Dichtkopf wirken.

Kräfte, die auf den Dichtkopf wirken, umfassen beispielsweise eine oder mehrere der folgenden Kräfte: Der Schwerkraftvektor der Masse des Steuerzapfens in der Achse des Steuerzapfens (also die Schwerkraft) und/oder die Druckkraft einer Feder, um ein Schließen der Vorsteueröffnung zu bewirken, wenn das Magnetventil ausgeschaltet ist respektive wird, und/oder die Spulenkraft, die an dem Steuerzapfen zieht, und/oder der Druck (also eine Druckkraft) in einer Zwischenkammer des Magnetventils.

In einer weiteren vorteilhaften Ausführungsform des Haushaltsgeräts ist eine Steuerung zum Steuern des Magnetventils vorgesehen, die ausgebildet, eine Flussrate und/oder einen Druck des Fluides gemäß einem Eingangsstrom oder gemäß einer Eingangsspannung einer Spule des Magnetventils zu steuern. Dadurch wird insbesondere der technische Vorteil erreicht, dass das Magnetventil einfach angesteuert werden kann, so dass insbesondere ein zuverlässiger Betrieb realisiert werden kann.

In einer weiteren vorteilhaften Ausführungsform des Haushaltsgeräts umfasst die Steuerung eine Nachschlagetabelle, die einen Zusammenhang zwischen einer bestimmten Eingangsspannung und/oder einem bestimmten Eingangsstrom einerseits und einer Flussrate und/oder einem Druck des Fluids andererseits angibt. Dadurch wird insbesondere der technische Vorteil erreicht, dass eine effiziente Steuerung des Magnetventils realisiert werden kann. Die Nachschlagetabelle ist zum Beispiel in einem Speicher der Steuerung gespeichert. Die Steuerung steuert vorzugsweise das Magnetventil abhängig von der Nachschlagetabelle.

In einer weiteren vorteilhaften Ausführungsform des Haushaltsgeräts ist ein Flussratensensor vorgesehen, der ausgebildet ist, einen Fluss in der Druckleitung zu messen. Dadurch wird insbesondere der technische Vorteil erreicht, dass eine Flussrate in der Druckleitung gemessen werden kann.

In einer weiteren vorteilhaften Ausführungsform des Haushaltsgeräts ist ein Drucksensor vorgesehen, der ausgebildet ist, einen Druck in der Druckleitung zu messen. Dadurch wird insbesondere der technische Vorteil erreicht, dass ein Druck in der Druckleitung gemessen werden kann.

In einer weiteren vorteilhaften Ausführungsform des Haushaltsgeräts ist ein geschlossener Regelkreis umfassend den Drucksensor und/oder den Flussratensensor sowie das Magnetventil mit der Federeinrichtung gebildet, wobei mittels des geschlossenen Regelkreises der Fluss in der Druckleitung und/oder der Druck in der Druckleitung gesteuert oder geregelt werden kann respektive wird.

Ausführungsbeispiele der Erfindung sind in den Zeichnungen dargestellt und werden im Folgenden näher beschrieben.

Es zeigen:

Fig. 1            eine schematische Ansicht eines Haushaltsgerätes;

Fig. 2A und 2B   Querschnittsansichten eines Magnetventils;

Fig. 3            eine Querschnittsansicht eines Magnetventils mit einer Federeinrichtung mit zwei Federkonstanten;

Fig. 4            eine schematische Ansicht der Federeinrichtung; und

Fig. 5            eine Querschnittsansicht eines Magnetventils mit einer Federeinrichtung mit zwei Federkonstanten und einem Stift.

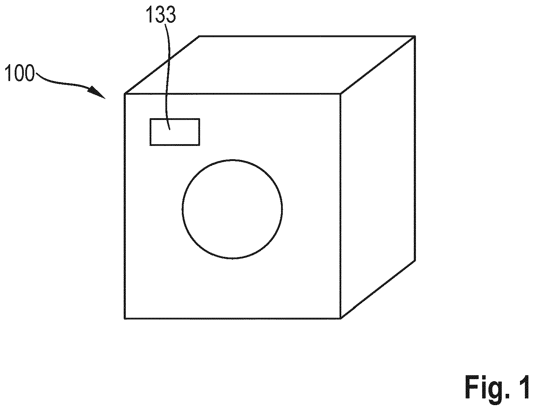

Fig. 1 zeigt eine schematische Ansicht eines Haushaltsgerätes 100. Das Haushaltgerät 100 ist beispielsweise eine Waschmaschine, die eine Wasserzuführung zu einem Waschmittelbehälter 133 mit mehreren Kammern umfasst. Je nach einer Flussrate in einer Druckleitung zu dem Waschmittelbehälter 133, wird das Wasser in eine der getrennten Kammern innerhalb des Waschmittelbehälters geleitet. Zum Steuern der Flussrate in der Druckleitung wird ein Magnetventil verwendet. Das Magnetventil ist ein Ventil, das von einem Elektromagneten betätigt wird. Bei einem vorgesteuerten Magnetventil wird zum Öffnen und Schließen eine Druckdifferenz des Betriebsdruckes verwendet. Der Antrieb des vorgesteuerten Magnetventils weist eine Vorsteuerfunktion auf, durch die das Hauptdichtelement, wie beispielsweise eine Membran oder ein Kolben, entlastet wird.

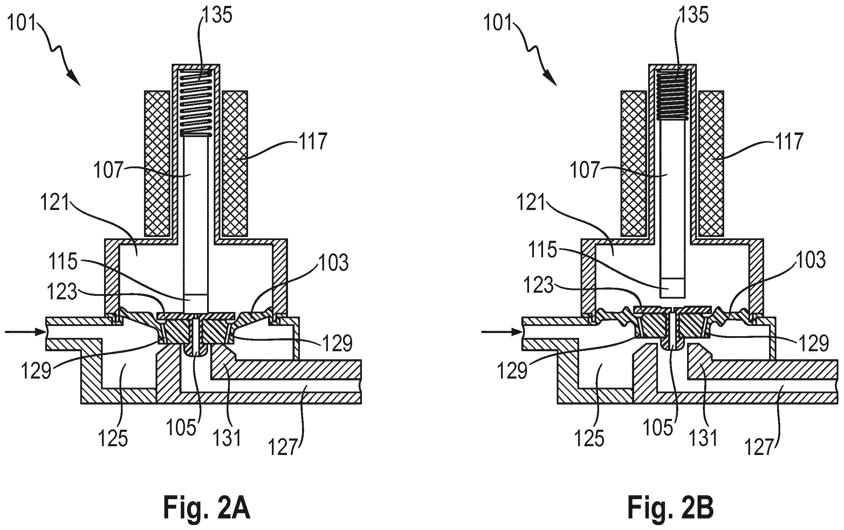

Fig. 2A zeigt eine Querschnittsansicht eines Magnetventils 101 und dessen Komponenten im geschlossenen Zustand. Das Magnetventil 101 umfasst eine Einlasskammer 125, eine Membran 103 mit einem Membranhalter 123 und Membranöffnungen 129, eine Zwischenkammer 121 und einen Steuerzapfen 107, dessen Bewegung von einer Spule 117 gesteuert wird und der einen Dichtkopf 115 umfasst. Der Dichtkopf 115 ist aus Gummi oder einem anderen weichen Material hergestellt, um ein Schließen und Abdichten der Vorsteueröffnung 105 sicherzustellen. Der Dichtkopf 115 und der Steuerzapfen 107 sind einstückig verbunden. Weiter umfasst das Magnetventil 101 eine Auslasskammer 127, eine Membranunterstützung 131 und eine Feder 135, um ein Schließen der Vorsteueröffnung 105 zu bewirken, wenn das Magnetventil 101 ausgeschaltet wird.

Im geschlossenen Zustand steht der Dichtkopf 115 des Steuerzapfens 107 in Kontakt mit dem Membranhalter 123. Durch diesen Kontakt wird die Vorsteueröffnung 105 geschlossen. Wenn ein Fluid in die Einlasskammer 125 eindringt, wird zunächst die Einlasskammer 125 gefüllt. Ein Teil des Fluides gelangt in die Zwischenkammer 121 über die Membranöffnungen 129. Dadurch steigt der Druck in der Zwischenkammer 121 an und die Membran 103 wird gegen die Membranunterstützung 131 gedrückt, so dass die Verbindung zwischen der Einlasskammer 125 und der Auslasskammer 127 geschlossen wird. Das Magnetventil 101 kann in unterschiedlichen Lagen verwendet werden, wie beispielsweise kopfüber. Das Magnetventil 101 ist derart gestaltet, dass ein Schließen des Magnetventils 101 in allen Lagen ermöglicht wird.

Wenn die Spule 117 aktiviert wird, bewegt sich der Steuerzapfen 107 zusammen mit dem Dichtkopf 115 von dem Membranhalter 123 weg und komprimiert die Feder 135. Dadurch wird die Vorsteueröffnung 105 geöffnet, so dass das Fluid in die Zwischenkammer 121 strömen kann, um anschließend durch die Vorsteueröffnung 105 in die Auslasskammer 127 zu sickern. Dadurch entspannt sich der Druck innerhalb der Zwischenkammer 121.

Sobald der Druck in der Zwischenkammer 121 kleiner als der Druck in der Einlasskammer 125 ist, wird die Membran 103 angehoben, so dass die Öffnung freigegeben wird, die die Einlasskammer 125 und die Auslasskammer 127 miteinander verbindet. Anschließend strömt das Fluid von der Einlasskammer 125 direkt in die Auslasskammer 127.

Fig. 2B zeigt eine Querschnittsansicht eines Magnetventils 101 und dessen Komponenten im geöffneten Zustand. Wenn die Spule 117 deaktiviert wird, drückt die Feder 135 den Steuerzapfen 107 in Richtung des Membranhalters 123, so dass die Vorsteueröffnung 105 verschlossen wird. Dann steigt der Druck in der Zwischenkammer 121 an und die Membran 103 wird gegen die Membranunterstützung 131 gedrückt. Das Magnetventil 101 ist geschlossen. Eine Flussrate oder ein Auslassdruck hängt von dem Einlassdruck und der Öffnung zwischen der Membran 103 und der Membranunterstützung 131 ab. Je größer diese Öffnung ist, desto größer ist die Auslassflussrate oder ein Auslassdruck des Fluides. Der Auslassdruck ist auf den Einlassdruck abzüglich von Systemverlusten begrenzt.

Die Öffnung zwischen der Membran 103 und der Membranunterstützung 131 hängt von dem Druck in der Einlasskammer 125 und dem Druck in der Zwischenkammer 121 ab. Der Druck in der Zwischenkammer 125 kann durch die vereinfachte Formel:

$$P5 = P1 - \frac{R4\,(P1 - P11)}{R4 + R10}$$

geschätzt werden, in der P1 der Druck in der Einlasskammer 125 ist, P5 der Druck in der Zwischenkammer 125 ist, P11 der Druck in der Auslasskammer 127 ist, R4 der Gesamtfließwiderstand an den Membranöffnungen 129 ist und R10 der Fließwiderstand an der Vorsteueröffnung 105 ist. Gemäß der obigen vereinfachten Formel hängt, falls P1 konstant ist, P11 ebenfalls konstant (möglicherweise 0) ist und R4 ebenfalls konstant ist, P5 hauptsächlich von R10 ab. R10 hängt von der Form und dem Material der Vorsteueröffnung 105 ab. R10 verändert sich ebenfalls gemäß dem Abstand zwischen dem Dichtkopf 115 zu der Vorsteueröffnung 105. Je größer dieser Abstand ist, desto kleiner ist R10. Je kleiner dieser Abstand ist, desto größer ist R10. Folglich verändert sich die Auslassflussrate gemäß der Position des Dichtkopfes 115 hinsichtlich der Vorsteueröffnung 105. Daher kann ein Proportionalventil durch Steuern der Position des Dichtkopfes 115 erzeugt werden. Daher kann die Zugkraft, die durch die Spule 117 auf den Steuerzapfen 107 erzeugt wird, die Auslassflussrate oder den Auslassdruck des Fluides in der Auslasskammer 127 steuern. Die Zugkraft der Spule 117 wird durch den Strom oder die Spannung gesteuert, die auf diese angewendet wird. Die Gleichgewichtsposition des Dichtkopfes 115 wird erreicht, wenn sich die folgenden Kräfte ausgleichen: Der Schwerkraftvektor X der Masse des Steuerzapfens in der Achse des Steuerzapfens 107, die Druckkraft der Feder 135 und die Spulenkraft, die an dem Steuerzapfen 107 zieht und der Druck in der Zwischenkammer 121.

Ein Proportionalventil weist eine Feder 135 mit einer höheren Federkonstante als derjenigen eines Ein-/Ausschaltmagnetventils auf. Die Feder 135 in einem Ein-/Ausschaltmagnetventils wird dazu verwendet, ein korrektes Schließen des Ventils sicherzustellen. Daher ist die Gleichgewichtsposition des Steuerzapfens 107 eines Ein-/Ausschaltmagnetventils instabil. Die Instabilität in der Position des Steuerzapfens 107, falls die Federkonstante der Feder zu gering ist, geschieht aufgrund eines plötzlichen Abfalls in dem Druckwert P5, wenn der Steuerzapfen 107 beginnt von der Spulenkraft zurückgezogen zu werden. Dieser Druckabfall lässt das System als ein nicht-lineares System reagieren, in dem die existierenden Aufwärtskräfte nicht mehr der Abwärtskraft des Druckes P5 gegenüberstehen (oder zumindest nicht in der gleichen Größe). Als Ergebnis wird der Steuerzapfen 107 gezogen bis dieser mit dem Gehäuse 119 zusammentrifft oder die Feder 135 vollständig komprimiert ist, so dass das Magnetventil vollständig öffnet.

Im Falle einer Feder 135 mit einer höheren Federkonstante wird eine größere Spulenkraft bereitgestellt, um ein Öffnen des Magnetventils 101 zu starten. Da das Magnetventil 101 geschlossen ist, ist P5 an seinem höchsten Wert und die Feder 135 weist eine hohe Federkonstante aus. Wenn sich das Magnetventil 101 zu öffnen beginnt, unterliegt die Position des Steuerzapfens 107 ebenfalls einem Nichtlinearitätseffekt aufgrund des plötzlichen Abfalls von P5. Nichtsdestotrotz weist die Feder 135 eine Federkonstante auf, die groß genug ist, die Kräfte erneut auszugleichen und den Steuerzapfen 107 in einer Gleichgewichtsposition zu halten. Da die Feder 135 eine hohe Federkonstante aufweist, stellt die Spule 117 in diesem Fall eine höhere Zugkraft bereit. Dies wird durch eine Spule 117 erreicht, die größere Abmessungen aufweist und mit einer höheren elektrischen Leistung versorgt wird.

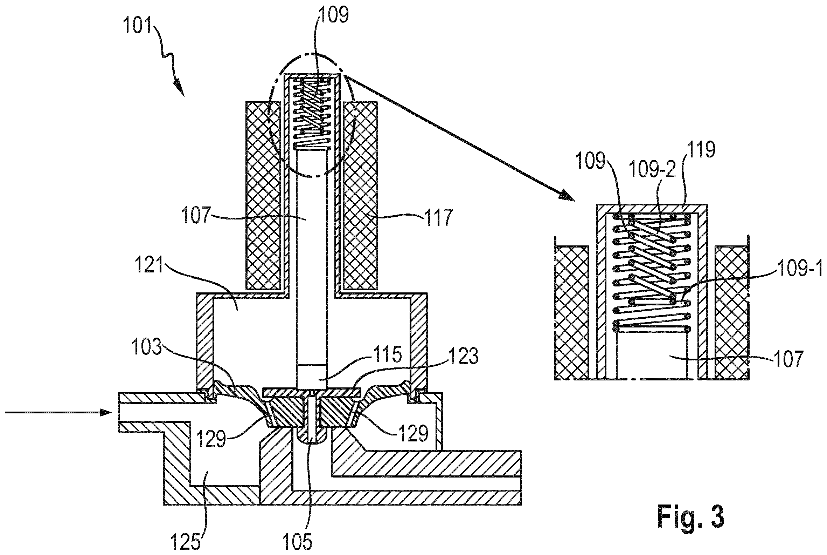

Fig. 3 zeigt eine Querschnittsansicht des Magnetventils 101 mit einer Federeinrichtung 109 mit zwei Federkonstanten. Die Federeinrichtung 109 kombiniert zwei unterschiedliche Federn 109-1 und 109-2. Die Feder 109-2 weist eine höhere Federkonstante auf und ist kürzer als die Feder 109-1. Die Feder 109-1 erlaubt ein korrektes Schließen des Magnetventils 101 mit einer relativ kleinen Federkonstante. Sobald die Spule 117 aktiviert wird, wird der Steuerzapfen 107 nach oben gezogen. Sobald der Druck P5 abfällt, wird der Steuerzapfen 107 durch die Feder 109-2 mit einer größeren Federkonstante in einer Gleichgewichtsposition gehalten. In diesem nicht-linearen System kann die Spule 117 mit einem geringeren Bauraum aufgrund der Tatsache realisiert werden, dass diese zur gleichen Zeit nicht den höchsten Druck P5 zusammen mit der höheren Federkonstante der Feder 109-2 aufweist.

Wird die Feder 109-2 komprimiert, wird der Druck P5 bereits durch die anfängliche Bewegung des Steuerzapfens 107 verringert. Beide Federn 109-1 und 109-2 können parallel oder seriell angeordnet sein. Das Magnetventil 101 ist in einem unbestromten Zustand geschlossen (NC - Normally Closed).

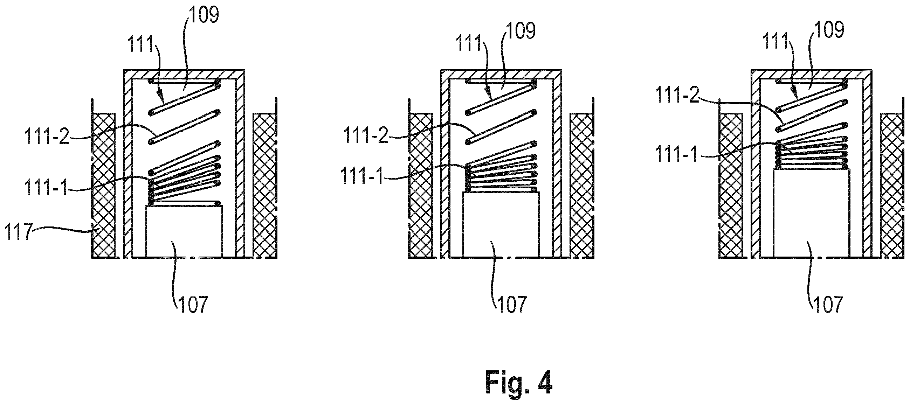

Fig. 4 zeigt eine schematische Ansicht der Federeinrichtung 109. In dieser Federeinrichtung 109 wird eine einzige Feder 111 mit einem ersten Federabschnitt 111-1 mit der ersten Federkonstante und einem zweiten Federabschnitt 111-2 mit der zweiten Federkonstante 111-2 verwendet. Die Feder 111 ist durch zwei unterschiedliche Wicklungsabstände und/oder Durchmesser realisiert, die den Federabschnitt 111-1 und den Federabschnitt 111-2 bilden. Zunächst wird der Abschnitt 111-1 mit einer kleineren Federkonstante komprimiert.

Der zweite Federabschnitt 109-2 wird dann komprimiert, wenn der erste Federabschnitt 109-1 nahezu vollständig komprimiert worden ist. Dadurch kann eine gleiche Wirkung wie durch zwei getrennte parallel oder seriell angeordnete Federn mit einer unterschiedlichen Federkonstante erreicht werden.

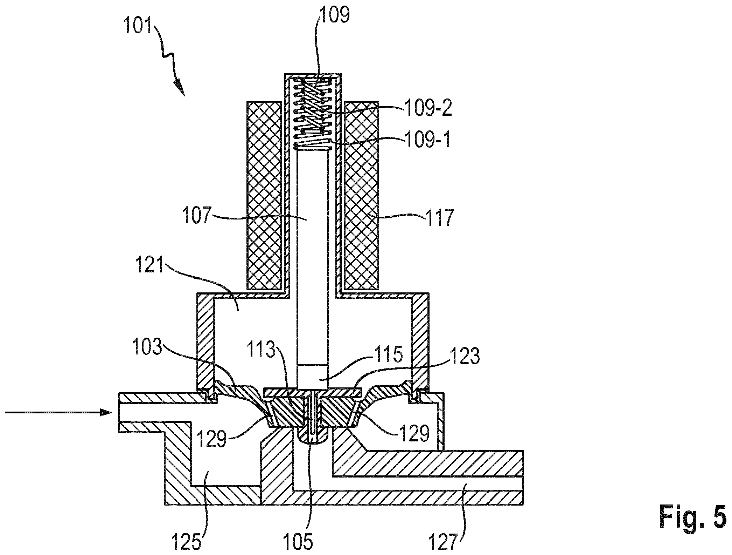

Fig. 5 zeigt eine Querschnittsansicht eines Magnetventils 101 mit einer Federeinrichtung 109 mit zwei Federkonstanten und einem Stift 113. Der Fließwiderstand R10 verändert sich gemäß dem Abstand des Steuerzapfens 107 zu der Vorsteueröffnung 105. Um die Sensibilität von dem Fließwiderstand R10 auf die Position des Steuerzapfens 107 zu verringern, tritt der Stift 113 aus dem Dichtkopf 115 heraus. Dieser Stift 113, der an dem Dichtkopf 115 und/oder dem Steuerzapfen 107 befestigt ist, verringert die Sensibilität des Fließwiderstandes R10 auf die Position des Steuerzapfens 107. Der Stift 113 weist einen Durchmesser auf, der kleiner als jener der Vorsteueröffnung 105 ist und eine Länge, die größer als der Durchmesser der Vorsteueröffnung 105 ist. Der Stift 113 weist zudem eine Länge auf, die größer als die Dicke der Membran 103 und gleich der Tiefe der Vorsteueröffnung 105 ist.

Dadurch kann der Stift 113 tief in die Vorsteueröffnung 105 eindringen, so dass eine genaue und feine Steuerung des Flusses durch das Magnetventil 101 ermöglicht wird. Dies erlaubt eine bessere Steuerung des Fließwiderstandes R10 und folglich eine bessere Steuerung des Flusses durch die Vorsteueröffnung 105 und des Druckes P5 in der Zwischenkammer 121. Diese verbesserte Steuerung resultiert in einer glatteren Flussraten- oder Drucksteuerung in der Auslasskammer 127.

Der Stift 113 und die Vorsteueröffnung 105 können unterschiedliche Formen aufweisen. Der Stift 115 und die Vorsteueröffnung 105 sind beispielsweise im Querschnitt kreisförmig, so dass sich gleichmäßige Strömungsverhältnisse um den Stift 113 einstellen. Dadurch wird zwischen dem Stift 113 und einer Innenseite der Vorsteueröffnung 105 ein umlaufender Spalt gebildet, so dass sich beim Anheben des Stiftes ein laminarer Fluss in dem Spalt ergibt.

Der Stift 113 ist beispielsweise aus Kunststoff oder einstückig aus dem Dichtmaterial des Dichtkopfes 115 gebildet. Der Stift 113 kann jedoch auch durch einen Metallstift gebildet sein, der durch den Steuerzapfen 107 herausragt. Der Stift ist in der Mitte des kreisförmigen Dichtkopfes 115 angeordnet, so dass sich gleichmäßige Strömungsverhältnisse um den Dichtkopf herum ausbilden.

Das Magnetventil 101 mit der Federeinrichtung 109 kann zusammen mit einem Flussratensensor verwendet werden, um den Fluss in der Druckleitung mit einem Flussratensensor oder den Druck der Druckleitung mit einem Drucksensor mittels eines geschlossenen Regelkreises zu steuern. Die Spule 117 kann mit Wechsel- oder Gleichstrom betrieben werden. Nichtsdestotrotz weist eine Gleichstromspule 117 eine stabilere Position des Steuerzapfens 107 aufgrund des Gleichstromes auf. Die Spule 117 arbeitet durch Anlegen eines Stroms oder einer Spannung. Je größer der Strom in der Spule 117 ist, desto größer ist die Zugkraft, die auf den Steuerzapfen 107 wirkt. Ein Proportionalmagnetventil, das in einem unbestromten Zustand geöffnet ist (NO - Normally Opened), kann mittels des gleichen Prinzips realisiert werden. In diesem Fall wird die Kraft, die durch die Spule 117 erzeugt wird, verwendet, um das Magnetventil 101 bei Anwenden einer elektrischen Leistung zu schließen.

Die Federn 109-1 und 109-2 können in einer Weise zusammengesetzt werden, in der das Magnetventil 101 in Ruhe gehalten wird, wenn an die Spule keine elektrische Leistung angelegt wird. Jede Federlänge wird entsprechend den Systemeigenschaften eingestellt. Jede Federkonstante wird ebenfalls entsprechend den Systemeigenschaften eingestellt. Wenn die Federn 109-1 und 109-2 parallel angeordnet sind, ist es nicht notwendig, dass die eine Feder 109-1 innerhalb der anderen Feder 109-2 angeordnet ist. Stattdessen können die Federn 109-1 und 109-2 nebeneinander angeordnet sein.

Die Feder 109-2 kann innerhalb der Feder 109-1 angeordnet sein oder umgekehrt. Wenn die eine Feder 109-2 innerhalb der anderen Feder 109-1 angeordnet ist, können die Wicklungsrichtung und der Abstand der Wicklungen der Federn 109-1 und 109-2 derart gestaltet sein, dass ein Verhaken der Federn 109-1 und 109-2 verhindert wird. Dabei kann auch der Durchmesser der Federn 109-1 und 109-2 berücksichtigt werden. Zudem können auch mehr als zwei Federn 109-1 und 109-2 kombiniert werden, um mehrere Abschnitte mit weiteren Federkonstanten zum Einstellen des Flusses oder des Druckes zu erhalten.

Die Hauptvorteile des Magnetventils 101 sind eine Geräuschverringerung durch eine ruckfreie Aktivierung des Magnetventils 101 mittels einer Aufwärtsrampe oder einer Abwärtsrampe, eine Geräuschverringerung durch eine Flusssteuerung in Druckleitungen und eine Fähigkeit, die Flussrate oder den Druck innerhalb des Haushaltsgerätes 100 zu steuern. Eine Regelung mit einer geschlossenen Regelschleife kann durch eine Steuerung mittels einer Nachschlagetabelle ersetzt werden, bei der ein bestimmter Bereich einer der Eingabespannung einen bestimmten Bereich des Auslassflussrate oder des Drucks impliziert. Insbesondere nimmt eine Komplexität einer Verdrahtung ab. Das Magnetventil 101 kann in einer geringen Größe mit einer einfachen Steuerung und einem zuverlässigen Betrieb realisiert werden. Das Magnetventil 101 ist in der Lage die Flussrate oder den Druck des Fluides gemäß einem Eingangsstrom oder einer Eingangsspannung der Spule 117 zu steuern.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

| | |
|---|---|
| 100 | Haushaltsgerät |
| 101 | Magnetventil |
| 103 | Membran |
| 105 | Vorsteueröffnung |
| 107 | Steuerzapfen |
| 109 | Federeinrichtung |
| 109-1 | Feder |
| 109-2 | Feder |
| 111 | Feder |
| 111-1 | Federabschnitt |
| 111-2 | Federabschnitt |
| 113 | Stift |
| 115 | Dichtkopf |
| 117 | Spule |
| 119 | Gehäuse |
| 121 | Zwischenkammer |
| 123 | Membranhalter |

| | |
|---|---|
| 125 | Einlasskammer |
| 127 | Auslasskammer |
| 129 | Membranöffnungen |
| 131 | Membranunterstützung |
| 133 | Waschmittelbehälter |
| 135 | Feder |

**Patentansprüche**

1. Haushaltsgerät (100) mit einem Magnetventil (101), das eine Membran (103) mit einer Vorsteueröffnung (105), einen Steuerzapfen (107) zum Verschließen der Vorsteueröffnung (105) und eine Federeinrichtung (109) zum Beaufschlagen des Steuerzapfens (107) mit einer Kraft umfasst, **dadurch gekennzeichnet, dass** die Federeinrichtung (109) eine erste Federkonstante zum Drücken des Steuerzapfens (107) auf die Vorsteueröffnung (105) in einem geschlossenen Zustand der Vorsteueröffnung (105) und eine zweite Federkonstante zum Halten des Steuerzapfens (107) in einer Gleichgewichtsposition in einem geöffneten Zustand der Vorsteueröffnung (105) aufweist, wobei die erste Federkonstante kleiner ist als die zweite Federkonstante.

2. Haushaltsgerät (100) nach Anspruch 1, **dadurch gekennzeichnet, dass** die Federeinrichtung eine erste Feder (109-1) mit der ersten Federkonstante und eine zweite Feder (109-2) mit der zweiten Federkonstante umfasst.

3. Haushaltsgerät (100) nach Anspruch 2, **dadurch gekennzeichnet, dass** die erste Feder (109-1) und die zweite Feder (109-2) parallel oder seriell angeordnet sind.

4. Haushaltsgerät (100) nach Anspruch 2 oder 3, **dadurch gekennzeichnet, dass** die erste Feder (109-1) eine größere Länge als die zweite Feder (109-2) aufweist.

5. Haushaltsgerät (100) nach einem der Ansprüche 2 bis 4, **dadurch gekennzeichnet, dass** die erste Feder (109-1) und/oder die zweite Feder (109-2) durch Spiralfedern gebildet sind.

6. Haushaltsgerät (100) nach Anspruch 5, **dadurch gekennzeichnet, dass** die erste Spiralfeder (109-1) und/oder zweite Spiralfeder (109-2) an einem Gehäuse (119) des Magnetventils (101) abgestützt sind.

7. Haushaltsgerät (100) nach Anspruch 5 oder 6, **dadurch gekennzeichnet, dass** die zweite Spiralfeder (109-2) innerhalb der ersten Spiralfeder (109-1) angeordnet ist.

8. Haushaltsgerät (100) nach Anspruch 5 oder 6, **dadurch gekennzeichnet, dass** die erste Spiralfeder (109-1) innerhalb der zweiten Spiralfeder (109-2) angeordnet ist.

9. Haushaltsgerät (100) nach Anspruch 7 oder 8, **dadurch gekennzeichnet, dass** die erste Spiralfeder (109-1) eine gegenläufige Schraubendrehung zu der zweiten Spiralfeder (109-2) aufweist.

10. Haushaltsgerät (100) nach Anspruch 1, **dadurch gekennzeichnet, dass** die Federeinrichtung (109) eine Feder (111) mit einem ersten Federabschnitt (111-1) mit der ersten Federkonstante und einem zweiten Federabschnitt (111-2) mit der zweiten Federkonstante (111-2) umfasst.

11. Haushaltsgerät (100) nach Anspruch 10, **dadurch gekennzeichnet, dass** der erste Federabschnitt (111-1) an dem Steuerzapfen (107) angrenzt.

12. Haushaltsgerät (100) nach einem der vorangehenden Ansprüche, **dadurch gekennzeichnet, dass** der Steuerzapfen (107) einen Stift (113) zum Eindringen in die Vorsteueröffnung (105) umfasst.

13. Haushaltsgerät (100) nach Anspruch 12, **dadurch gekennzeichnet, dass** der Stift (113) einen kleineren Durchmesser als die Vorsteueröffnung (105) aufweist.

14. Haushaltsgerät (100) nach Anspruch 12 oder 13, **dadurch gekennzeichnet, dass** der Stift (113) durch einen Dichtkopf (115) zum Abdichten der Vorsteueröffnung (105) gebildet ist.

15. Haushaltsgerät (100) nach einem der vorangehenden Ansprüche, **dadurch gekennzeichnet, dass** eine Steuerung zum Steuern des Magnetventils (101) vorgesehen, die ausgebildet, eine Flussrate und/oder einen Druck des Fluides gemäß einem Eingangsstrom oder einer Eingangsspannung eine Spule (117) des Magnetventils (101) zu steuern.

16. Haushaltsgerät (100) nach Anspruch 15, **dadurch gekennzeichnet, dass** die Steuerung eine Nachschlagetabelle umfasst, die einen Zusammenhang zwischen einer bestimmten Eingangsspannung und/oder einem bestimmten Eingangsstrom einerseits und einer Flussrate und/oder einem Druck des Fluids andererseits angibt.

17. Haushaltsgerät (100) nach einem der vorangehenden Ansprüche, **dadurch gekennzeichnet, dass** ein Flussratensensor vorgesehen ist, der ausgebildet ist, einen Fluss in einer Druckleitung des Haushaltsgeräts (100) zu messen, und/oder dass ein Drucksensor vorgesehen ist, der ausgebildet ist, einen Druck in der Druckleitung des Haushaltsgeräts (100) zu messen.

18. Haushaltsgerät (100 nach Anspruch 17, **dadurch gekennzeichnet, dass** ein geschlossener Regelkreis umfassend den Drucksensor und/oder den Flussratensensor sowie das Magnetventil (101) mit der Federeinrichtung (109) gebildet ist, wobei mittels des geschlossenen Regelkreises der Fluss in der Druckleitung und/oder der Druck in der Druckleitung gesteuert oder geregelt werden kann.

**Claims**

1. Household appliance (100) having a solenoid valve (101), which comprises a membrane (103) having a pilot control opening (105), a control bolt (107) for closing the pilot control opening (105), and a spring system (109) for subjecting the control bolt (107) to a force, **characterised in that** the spring system (109) has a first spring constant for pressing the control bolt (107) onto the pilot control opening (105) when the pilot control opening (105) is in a closed state and a second spring constant for holding the control bolt (107) in a balanced position when the pilot control opening (105) is in an open state, wherein the first spring constant is lower than the second spring constant.

2. Household appliance (100) according to claim 1, **characterised in that** the spring system comprises a first spring (109-1) having the first spring constant and a second spring (109-2) having the second spring constant.

3. Household appliance (100) according to claim 2, **characterised in that** the first spring (109-1) and the second spring (109-2) are arranged in parallel or in series.

4. Household appliance (100) according to claim 2 or 3, **characterised in that** the first spring (109-1) has a greater length than the second spring (109-2).

5. Household appliance (100) according to one of claims 2 to 4, **characterised in that** the first spring (109-1) and/or the second spring (109-2) take the form of spiral springs.

6. Household appliance (100) according to claim 5, **characterised in that** the first spiral spring (109-1) and/or the second spiral spring (109-2) is supported against a housing (119) of the solenoid valve (101).

7. Household appliance (100) according to claim 5 or 6, **characterised in that** the second spiral spring (109-2) is arranged within the first spiral spring (109-1).

8. Household appliance (100) according to claim 5 or 6, **characterised in that** the first spiral spring (109-1) is arranged within the second spiral spring (109-2).

9. Household appliance (100) according to claim 7 or 8, **characterised in that** the first spiral spring (109-1) has a helical rotation which is opposite to that of the second spiral spring (109-2).

10. Household appliance (100) according to claim 1, **characterised in that** the spring system (109) comprises a spring (111) which has a first spring section (111-1) having the first spring constant and a second spring section (111-2) having the second spring constant (111-2).

11. Household appliance (100) according to claim 10, **characterised in that** the first spring section (111-1) abuts the control bolt (107).

12. Household appliance (100) according to one of the preceding claims, **characterised in that** the control bolt (107) comprises a pin (113) for penetrating into the pilot control opening (105).

13. Household appliance (100) according to claim 12, **characterised in that** the pin (113) has a smaller diameter than the pilot control opening (105).

14. Household appliance (100) according to claim 12 or 13, **characterised in that** the pin (113) is formed by a sealing head (115) for sealing the pilot control opening (105).

15. Household appliance (100) according to one of the preceding claims, **characterised in that** a control unit is provided for controlling the solenoid valve (101) and is so designed as to control a flow rate and/or a pressure of the fluid according to an input current or an input voltage to a coil (117) of the solenoid valve (101).

16. Household appliance (100) according to claim 15, **characterised in that** the control unit comprises a reference table which specifies a relationship between a specific input voltage and/or a specific input current on one hand and a flow rate and/or a pressure of the fluid on the other hand.

17. Household appliance (100) according to one of the preceding claims, **characterised in that** provision is made for a flow rate sensor which is so designed as to measure a flow in a pressure line of the household appliance (100), and/or for a pressure sensor which is so designed as to measure a pressure in the pressure line of the household appliance (100).

**18.** Household appliance (100) according to claim 17, **characterised in that** a closed control loop is formed comprising the pressure sensor and/or the flow rate sensor and the solenoid valve (101) with the spring system (109), wherein the flow in the pressure line and/or the pressure in the pressure line can be controlled or regulated by means of the closed control loop.

**Revendications**

**1.** Appareil ménager (100) muni d'une électrovanne (101) qui comprend une membrane (103) dotée d'un orifice pilote (105), un tourillon de commande (107) pour fermer l'orifice pilote (105) et un dispositif à ressorts (109) pour appliquer une force au tourillon de commande (107), **caractérisé en ce que** le dispositif à ressorts (109) a une première constante de rappel pour appuyer le tourillon de commande (107) sur l'orifice pilote (105) lorsque l'orifice pilote (105) est fermé et une seconde constante de rappel pour maintenir le tourillon de commande (107) dans une position d'équilibre lorsque l'orifice pilote (105) est ouvert, la première constante de rappel étant inférieure à la seconde constante de rappel.

**2.** Appareil ménager (100) selon la revendication 1, **caractérisé en ce que** ledit dispositif à ressorts comprend un premier ressort (109-1) ayant la première constante de rappel et un second ressort (109-2) ayant la seconde constante de rappel.

**3.** Appareil ménager (100) selon la revendication 2, **caractérisé en ce que** le premier ressort (109-1) et le second ressort (109-2) sont disposés en parallèle ou en série.

**4.** Appareil ménager (100) selon la revendication 2 ou 3, **caractérisé en ce que** le premier ressort (109-1) a une longueur plus importante que le second ressort (109-2).

**5.** Appareil ménager (100) selon l'une des revendications 2 à 4, **caractérisé en ce que** le premier ressort (109-1) et/ou le second ressort (109-2) sont constitués par des ressorts spiraux.

**6.** Appareil ménager (100) selon la revendication 5, **caractérisé en ce que** le premier ressort spiral (109-1) et/ou le second ressort spiral (109-2) sont en appui contre un boîtier (119) de l'électrovanne (101).

**7.** Appareil ménager (100) selon la revendication 5 ou 6, **caractérisé en ce que** le second ressort spiral (109-2) est disposé à l'intérieur du premier ressort spiral (109-1).

**8.** Appareil ménager (100) selon la revendication 5 ou 6, **caractérisé en ce que** le premier ressort spiral (109-1) est disposé à l'intérieur du second ressort spiral (109-2).

**9.** Appareil ménager (100) selon la revendication 7 ou 8, **caractérisé en ce que** le premier ressort spiral (109-1) est enroulé en spirale dans le sens opposé à celui du second ressort spiral (109-2).

**10.** Appareil ménager (100) selon la revendication 1, **caractérisé en ce que** le dispositif à ressorts (109) comprend un ressort (111) qui présente une première portion de ressort (111-1) ayant la première constante de rappel et une seconde portion de ressort (111-2) ayant la seconde constante de rappel (111-2).

**11.** Appareil ménager (100) selon la revendication 10, **caractérisé en ce que** la première portion de ressort (111-1) est adjacente au tourillon de commande (107).

**12.** Appareil ménager (100) selon l'une des revendications précédentes, **caractérisé en ce que** le tourillon de commande (107) comprend une tige (113) destinée à pénétrer dans l'orifice pilote (105).

**13.** Appareil ménager (100) selon la revendication 12, **caractérisé en ce que** la tige (113) a un diamètre inférieur à celui de l'orifice pilote (105).

**14.** Appareil ménager (100) selon la revendication 12 ou 13, **caractérisé en ce que** la tige (113) est constituée par une tête étanche (115) pour assurer l'étanchéité de l'orifice pilote (105).

**15.** Appareil ménager (100) selon l'une des revendications précédentes, **caractérisé en ce qu'**il est prévu une commande pour commander l'électrovanne (101), qui est adaptée pour commander un débit et/ou une pression du fluide selon un courant d'entrée ou une tension d'entrée d'une bobine (117) de l'électrovanne (101).

**16.** Appareil ménager (100) selon la revendication 15, **caractérisé en ce que** la commande comprend une table de consultation qui indique une relation entre une tension d'entrée déterminée et/ou un courant d'entrée déterminé d'une part et un débit d'écoulement et/ou une pression du fluide d'autre part.

**17.** Appareil ménager (100) selon l'une des revendications précédentes, **caractérisé en ce qu'**il est prévu un capteur de débit d'écoulement adapté pour mesurer un écoulement dans une conduite de refoulement de l'appareil ménager (100), et/ou **en ce qu'**il est prévu un capteur de pression adapté pour mesurer une pression dans la conduite de refoulement de l'appareil ménager (100).

18. Appareil ménager (100) selon la revendication 17, **caractérisé en ce qu'**il est formé un circuit de régulation fermé, comprenant le capteur de pression et/ou le capteur de débit d'écoulement ainsi que l'électrovanne (101) munie du dispositif à ressorts (109), le circuit de régulation fermé permettant de commander ou de régler l'écoulement dans la conduite de refoulement et/ou la pression dans la conduite de refoulement.

Fig. 1

**Fig. 2A**

**Fig. 2B**

**Fig. 3**

**Fig. 4**

Fig. 5

**IN DER BESCHREIBUNG AUFGEFÜHRTE DOKUMENTE**

**In der Beschreibung aufgeführte Patentdokumente**

- EP 685672 A1
- WO 8902557 A1
- JP H07198058 A
- US 20120228535 A1
- US 4178573 A
- US 5299775 A